# EUROPEAN PATENT APPLICATION

(11) **EP 2 533 259 A1**
(43) Date of publication of application: **12.12.2012**
(21) Application number: 11739616.8
(22) Date of filing: 18.01.2011
(51) Int. Cl.: H01F 41/02, C21D 1/34, C21D 1/42, C21D 6/00, C21D 9/00

(54) **AMORPHOUS CORE ANNEALING METHOD**

(30) Priority: 04.02.2010 JP 2010023224
(71) Applicant: Hitachi Industrial Equipment Systems Co., Ltd., Chiyoda-ku Tokyo 101-0022 (JP)
(72) Inventor: NAKANOUE, Kenji, Tainai-shi Niigata 959-2608 (JP)
(74) Representative: Gill, Stephen Charles
(86) International application number: PCT/JP2011/050692
(87) International publication number: WO 2011/096267

(57) **Abstract**

There is provided an amorphous core annealing method in which the annealing temperature distribution within an iron core is regulated so that deterioration in the magnetic properties, which is caused by unevenness of the annealing temperature within the iron core, can be suppressed, and the annealing time can be shortened. In order to regulate the annealing temperature distribution within the amorphous core at the annealing time, a heater 2a functioning as a heat source is held between laminated thin-film amorphous materials of an iron core 1a, and annealing is performed. By uniformly regulating the annealing conditions within the iron core 1a, deterioration in the magnetic properties, which is caused by unevenness of annealing, can be suppressed to a minimum. Also, an iron core of a special specification, for example, an iron core having a low core loss, or an iron core having a high magnetroresistance, can be manufactured by purposely using different annealing conditions within the iron core 1a. Further, the annealing time can be shortened by increasing the absolute quantity of heat transferred to the iron core per unit time. The iron core may be heated and annealed from the lamination surface, or may be annealed by being extended in the direction perpendicular to the lamination surface so as to form a plurality of steps.

## Description

### Technical Field

The present invention relates to an annealing method for an iron core such as a transformer and a reactor and, more particularly, to an annealing method for an amorphous core using an amorphous material.

### Background Art

Conventionally, there has been proposed an annealing furnace, in which amorphous cores are annealed, that is a means for annealing iron cores by uniformizing the in-furnace temperature of the annealing furnace, and especially, for effectively annealing iron cores made of an amorphous material for which the heat treatment time is restricted (Patent Literature 1). In the core annealing furnace for annealing amorphous cores, a heat source and a fan are provided in the upper portion of a furnace body, the furnace body forms a two-layer structure of the furnace interior formed by a partition wall on the inside of furnace body and a space formed between the partition wall and an outer wall on the outside of furnace body, the fan is installed in the center in the upper portion of the furnace body, the fan takes in hot air from the furnace interior of two-layer structure and sends the hot air to the outside of the two-layer structure, and the hot air enters the furnace interior from the lower portion of the furnace body to heat the iron core, thereby the hot air is circulated. Since the in-furnace temperature is uniformized, this annealing furnace can heat-treat large amounts of articles at one time in a batch mode, and can anneal amorphous cores used at present under severe heat treatment conditions.

Also, there have been proposed an amorphous transformer in which by excitation annealing an amorphous multiple leg-winding core so that the magnetic fluxes in the symmetrical direction flow to the surroundings with the central leg being the center, an inside iron core and an outside iron core constituting the amorphous multiple leg-winding core are needed to be excitation annealed individually, and the whole can be excited as a unit, thereby improving the excitation annealing work efficiency, and a manufacturing method therefor (refer to Patent Literature 2). Since the whole can be excitation annealed merely by mounting an exciting coil on the central leg only, the excitation annealing work becomes extremely easy. Also, if the magnetic fluxes are made a symmetrical flow with the central leg being the center, both of core loss and excitation capacity become satisfactory, and resultantly the core properties become especially excellent.

Also, there has been proposed a technique in which a thin band of an amorphous magnetic alloy is windingly formed, from a raw material hoop, into an iron core block having predetermined dimensions, which takes a substantially square shape and a similar figure in which only four corners are curved, next, an exciting coil is wound on the iron core block having been windingly formed into the predetermined dimensions to allow direct current or alternating current to flow, annealing is performed in a vessel filled with inert gas to prevent oxidation while the magnetic fluxes are caused to flow within the iron core block, and the wound and annealed iron core block is assembled into an iron core via a necessary electrical insulator, a dimension adjusting spacer, and the like (refer to Patent Literature 3).

Further, there has been proposed a heat treatment method for a ring-shaped core in which temperature variations within the identical ring-shaped core at the heat treatment time are eliminated and the temperature is controlled exactly, whereby the magnetic properties can be improved surely (refer to Patent Literature 4). This heat treatment method for a ring-shaped core is a heat treatment method for a ring-shaped core consisting of an amorphous alloy, and a heat treatment method for a ring-shaped core in which a heat transfer member consisting of a metallic material is brought into contact with the ring-shaped core to heat the ring-shaped core. It is said that it is preferable that the thermal conductivity of the heat transfer member at the heat treatment time be 15 (W/m·K) or higher, the heat transfer member include a columnar member having a cross section the size of which is about the same as that of the cross section of the inner peripheral portion of the ring-shaped core, and the columnar member be inserted in the inner peripheral portion of the ring-shaped core.

### Citation List

### Patent Literature

Patent Literature 1: Japanese Patent Laid-Open Publication No. 2008-285746
Patent Literature 2: Japanese Patent Laid-Open Publication No. 10-022145
Patent Literature 3: Japanese Patent Laid-Open Publication No. 8-227816
Patent Literature 4: Japanese Patent Laid-Open Publication No. 2004-14601

### Summary of Invention

### Technical Problem

The amorphous material used mainly as an iron core material for a transformer has a thickness smaller than that of a magnetic steel sheet similarly used as an iron core material for a transformer. When the amorphous material is used for a transformer, the core loss properties (especially at the time of low electric power) are excellent, so that it can be said that the amorphous material is a material excellent in manufacturing high-efficiency apparatuses. On the contrary, the amorphous material has a property of being difficult to work because of its high hardness, high brittleness, and extremely small stack thickness.

Annealing is usually performed to relax internal stress. For the amorphous material, in addition to the relaxation of internal stress, to further improve the properties, annealing is performed to align the internal magnetic field in one direction by applying a magnetic field so as to turn the magnetic field in the direction of iron core during annealing. The temperature of magnetic steel sheet may be raised to a temperature of about 800°C as the annealing temperature, whereas the amorphous metal must be annealed properly in terms of temperature because it crystallizes at a temperature of 380 to 400°C and the properties as a transformer deteriorate. In the annealing work in magnetic field, which is performed for improvement in material properties and orientation of material by straightening or the like, the magnetic properties change significantly depending on the annealing conditions (annealing temperature, annealing time), so that it is difficult to produce an iron core having fixed properties. Also, because of being amorphous, this material does not crystallize if being annealed at a low temperature, but has a problem that the annealing requires too much time. Therefore, the amorphous material has been annealed in a short period of time at a temperature somewhat lower than the crystallization temperature. For the amorphous material, if the temperature exceeds a fixed value, the crystallization of material proceeds, and the properties of amorphous material are lost.

In the annealing method at present, the amorphous core is placed in the annealing furnace, and the in-furnace temperature is regulated, whereby the annealing condition is regulated. In this method, however, the conduction mode of heat to the iron core at the open-air temperature (in-furnace temperature) is a mode such that heat is transferred from the surface of iron core to the interior thereof, and therefore the central portion of iron core is heated after delay, and annealing is not performed uniformly on the surface and in the central portion of iron core. Since the amorphous material is used lappedly in layers, by the layer of air intruding in between the amorphous layers, the thermal conductivity in the direction crossing the layer is decreased. Inversely, if the temperature distribution within the iron core at the annealing time can be regulated freely, an iron core having special magnetic properties as an iron core can be manufactured by making good use of the feature of amorphous material such that the magnetic properties are changed by the annealing conditions, for example, by differentiating the magnetic properties of a portion in which the peripheral length in the iron core is short from the magnetic properties of a portion in which the peripheral length therein is long.

Thereupon, problems to be solved remain in terms of enabling the temperature within the amorphous core at the annealing time to be regulated without depending on only the heat transfer from the surface.
An object of the present invention is to provide an amorphous core annealing method in which the temperature distribution within an amorphous core at the annealing time is regulated, the core loss caused by, for example, the unevenness of annealing within the iron core is prevented from becoming heavy, the magnetroresistance distribution within the iron core is changed depending on the annealing conditions, the core properties themselves are regulated, and the annealing time is shortened.

### Solution to Problem

To solve the above-described problems, in the present invention, as an annealing method for regulating the annealing temperature distribution within an amorphous core at the annealing time, an annealing method in which a heat source is held between iron cores, an annealing method in which heating is performed from a lamination surface, an annealing method in which a substance having high thermal conductivity is held between laminations, an annealing method in which the iron core is extended in the direction perpendicular to the lamination surface so as to form a plurality of steps, and an annealing method in which the iron core is divided into a plurality of pieces in the lamination direction are shown.

In the amorphous core annealing method in accordance with the present invention, an iron core is configured by a block-shaped laminated body formed by laminating a plurality of thin sheets of amorphous material, a heat source is held between the adjacent amorphous materials, and annealing can be performed by the heat supplied from the heat source. Also, the heat source is brought into contact with the lamination end surface of the block-shaped laminated body formed by laminating a plurality of thin sheets of amorphous material, and annealing can be performed by the heat supplied from the heat source.

### Advantageous Effects of Invention

According to the present invention, by uniformly regulating the annealing conditions within the iron core, deterioration in the magnetic properties, which is caused by unevenness of annealing, can be suppressed to a minimum. Also, an iron core of a special specification, for example, an iron core having a low core loss, or an iron core having a high magnetroresistance, can be manufactured by purposely using different annealing conditions within the iron core. Further, the annealing time can be shortened by increasing the absolute quantity of heat transferred to the iron core per unit time. Thereby, an excellent annealing process in which the annealing temperature can be varied can be obtained.

### Brief Description of Drawings

[Figure 1] Figure 1 is a perspective view showing one embodiment of a mode in which a heat source is held between iron cores in an amorphous core annealing method in accordance with the present invention.
[Figure 2] Figure 2 is a detailed perspective view showing one example of a heat source utilizing induction heating used in the annealing method shown in Figure 1.
[Figure 3] Figure 3 is a perspective view showing another embodiment of a mode in which a heat source is held between iron cores in an amorphous core annealing method in accordance with the present invention.
[Figure 4] Figure 4 is a perspective view showing an embodiment of a mode in which heat is applied from a lamination end surface in an amorphous core annealing method in accordance with the present invention.
[Figure 5] Figure 5 is a detailed view of a heat source, which is a heat source example used in Figure 4.
[Figure 6] Figure 6 is a perspective view showing a state in which an iron core is extended in the direction perpendicular to a lamination end surface so as to form a plurality of steps in an amorphous core annealing method in accordance with the present invention.
[Figure 7] Figure 7 is a perspective view showing a state in which an iron core is divided into a plurality of pieces in the lamination direction in an amorphous core annealing method in accordance with the present invention.

### Description of Embodiments

An amorphous core annealing method, that is, embodiments in which the temperature distribution within an iron core is regulated will now be described with reference to the accompanying drawings.

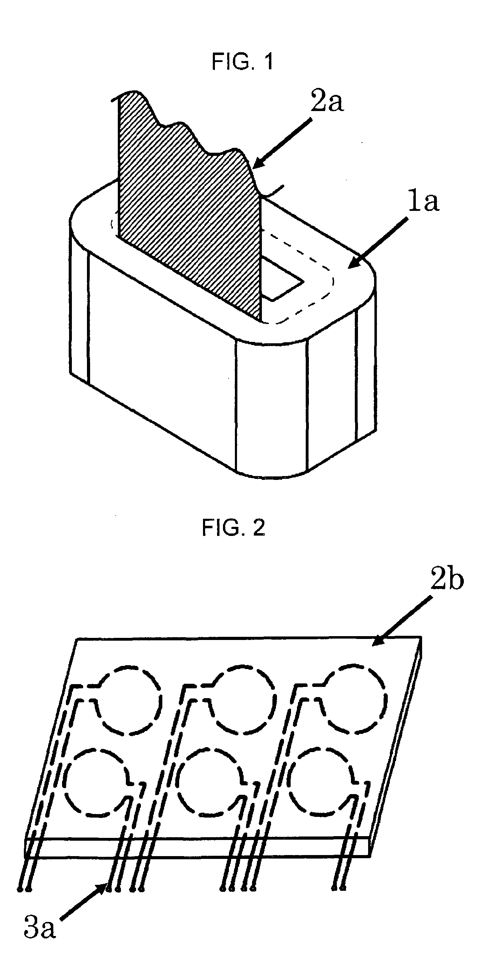

Figures 1 and 2 are views for explaining first and second embodiments of an amorphous core annealing method in accordance with the present invention. Figure 1 is a perspective view showing the first embodiment in which an amorphous core 1a is annealed, and shows a state in which a heater 2a is held between the amorphous cores 1a formed by laminating a large number of amorphous sheet materials (thin film materials). The heater 2a may be a heater such as an iron-made thin sheet, for example, such as to directly heat the heater 2a itself in Figure 1. The heater 2a is preferably a substance capable of withstanding a temperature not lower than the annealing temperature of 400°C, and is arranged between an amorphous material of n-th (n is an integer of 2 or more) layer from the innermost periphery side of the iron core 1a and an amorphous material of (n+1)th layer. The heater 2a is heated by a heat source on the outside, and carries annealing heat to between both the amorphous layers.

Figure 2 shows a heater 2b using the principle of induction heating (IH heating) as the second embodiment of the amorphous core annealing method. The heater 2b is an alternative example of the heater 2a, and is used to heat the iron core itself by using induction heating. For the heater 2b, an induction coil of one turn or several turns is produced in plural numbers by an electric wire 3a in a substance capable of withstanding a temperature not lower than the annealing temperature of 400°C. The quantity of heat given to the iron core 1a can be regulated by the voltage applied to each induction coil and the number of turns of coil.

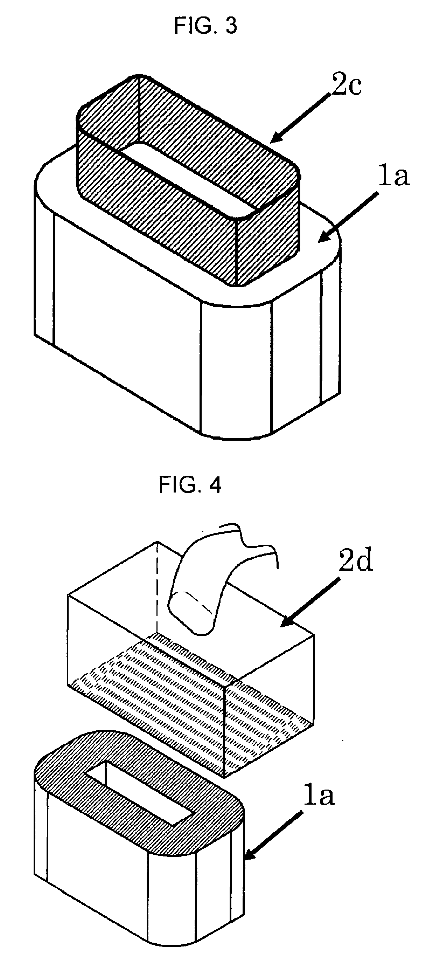

Figure 3 is an explanatory view showing a third embodiment of the amorphous core annealing method in accordance with the present invention. Figure 3 shows a state in which a tubular heat transfer material 2c is held in the amorphous cores 1a each consisting of an amorphous material. The heat transfer material 2c is a heat transfer material consisting of a copper sheet or the like for transferring heat to the central portion of the amorphous core of the iron core 1a, and is preferably a substance that, for example, can withstand a temperature not lower than the annealing temperature of 400°C and has a thermal conductivity of 25 W/m·K or higher. The heat transfer material 2c is arranged between an amorphous material of n-th (n is an integer of 2 or more) layer from the innermost periphery side of the iron core 1a and an amorphous material of (n+1)th layer. The heat transfer material 2c is in sufficient contact with both the amorphous layers because being formed into a tubular shape, and therefore can increase and ensure the heat conduction surface area. The heat transfer material 2c held between the amorphous materials of the iron core 1a plays a role in transmitting the outside temperature to between the amorphous materials when annealing is performed, and regulates the temperature distribution within the iron core 1a. The quantity of heat given to the iron core 1a by the heat transfer material 2c can be regulated by the stack thickness, sheet width, and thermal conductivity of the heat transfer material 2c. The number of sheets of the heat transfer material 2c can be increased according to the size of the iron core 1a like the number of sheets of the heater 2a or heater 2b.

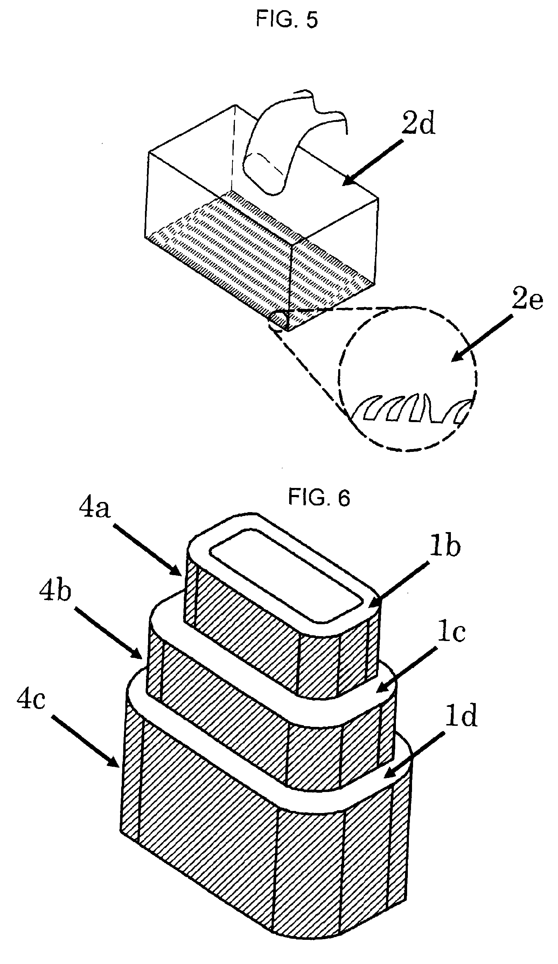

A fourth embodiment of the amorphous core annealing method in accordance with the present invention is explained with reference to the explanatory views of Figures 4 and 5. Figure 4 is a view showing a state in which the lamination end surface of the amorphous core 1a is heated by a heater 2d, and Figure 5 is a view showing the surface state of the heater 2d shown by enlarging a part of the heating surface thereof. The amorphous core has a space factor lower than that of a magnetic steel sheet, and has many air layers between the laminations, so that it is presumed that the heat transfer between the laminations is little. Therefore, by applying heat from the lamination end surface of amorphous thin material by the heater 2d, heat can be transferred efficiently to individual amorphous thin materials of iron core. As a result, the shortening of annealing time can be anticipated. The lamination end surface of iron core has some deviation between steps. Therefore, the surface that overheats the lamination surface of iron core is not flat, but is preferably in a rough fibre state as indicated by 2e to prevent the contact surface from decreasing. For the heating surface of the heater 2d, a material such as metal fibre, carbon fibre, or carbon nanotube, or a jelly-shaped material can be used. The heater 2d can ensure a contact area with the lamination end surface of the amorphous core 1a in a substantial meaning because of being provided with the above-described fibre-shaped heating surface.

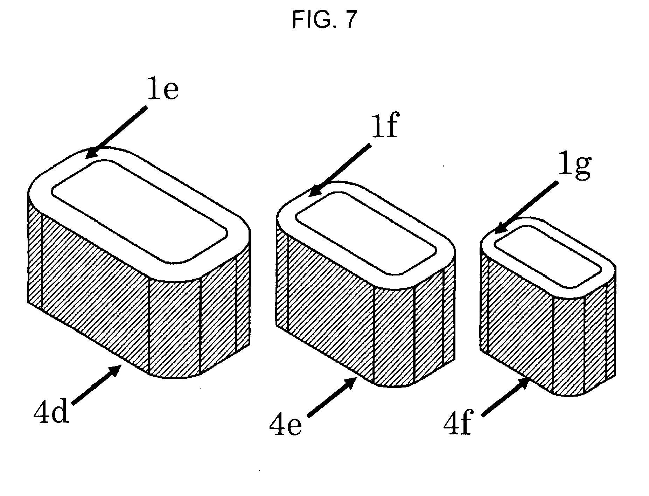

Fifth and sixth embodiments of the amorphous core annealing method in accordance with the present invention are explained with reference to the explanatory views of Figures 6 and 7. Figure 6 shows a state in which the iron core is extended so as to form several steps so that the temperature rise condition within the iron core does not change when annealing is performed, and Figure 7 shows a state in which the iron core is divided into a plurality of pieces with respect to the lamination surface of iron core. As described above, the heat transfer between the laminations of amorphous core is little, so that when annealing is performed, a temperature difference occurs between the outside of iron core and the central portion thereof. To solve this difference, as shown in Figure 6, the iron core is extended in the direction perpendicular to the lamination surface so as to form several steps (2 or more steps). After annealing, the iron core state is restored to the original state. At this time, as indicated by 4a, 4b and 4c in Figure 6, a substance capable of withstanding a temperature not lower than the annealing temperature of 400°C is wound in advance on the outermost periphery and the innermost periphery of each step, whereby a breakage of material caused by seizure and the like between the amorphous materials occurring at the work time can be prevented.

Also, as a method for solving the temperature difference between the outside of iron core and the central portion thereof, there is available a method for performing annealing by dividing the iron core into a plurality of pieces (22 or more steps) with respect to the lamination surface as shown in Figure 7. At this time, as indicated by 4d, 4e and 4f in Figure 7, a substance capable of withstanding a temperature not lower than the annealing temperature of 400°C is wound on the outermost periphery and the innermost periphery of each divided iron core, and the iron core is fixed. In this method, aside from the effect that all of the divided iron cores are annealed under the same condition and the unevenness of annealing temperature within the iron core is suppressed, each of the divided iron cores is annealed under a different condition, whereby the magnetroresistance can be changed, and the properties themselves of iron core can also be regulated. Since the amorphous material is annealed in a magnetic field, this material is preferably made a nonmagnetic material that does not exert an influence on the magnetic field. Also, the amorphous material is preferably annealed at the atmospheric temperature. However, in the case where heat is supplied from the lamination surface, the annealing temperature is not necessarily limited to the atmospheric temperature.

### Reference Signs List

- 1a, 1b, 1c, 1d, 1e, 1f, 1g ...: amorphous core
- 2a, 2b ...: heater
- 2c ...: heat transfer material
- 2d ...: heater
- 2e ...: enlarged view of heating surface of heater 2d
- 3a ...: electric wire for exciting coil
- 4a, 4b, 4c, 4d, 4e, 4f ...: fixture wound on outermost periphery and innermost periphery of iron core

## Claims

1. An amorphous core annealing method, wherein an iron core is configured by a block-shaped laminated body formed by laminating a plurality of thin sheets of amorphous material, a heat source is held between the adjacent amorphous materials, and annealing is performed by the heat supplied from the heat source.

2. The amorphous core annealing method according to claim 1, wherein the heat source is a heater which consists of a laminated thin sheet consisting of a nonmagnetic body and a plurality of independent coils which are held between the laminated thin sheets and generate heat due to induction overheat.

3. The amorphous core annealing method according to claim 2, wherein the heat source is held between an amorphous material of n-th (n is an integer of 2 or more) layer from the innermost periphery side and an amorphous material of (n+1)th layer.

4. The amorphous core annealing method according to claim 2, wherein the heat source is a substance having a thermal conductivity of 25 W/m·K or higher.

5. The amorphous core annealing method according to claim 1, wherein the heat source is a heat conductive thin sheet consisting of a nonmagnetic body which is heated by an external heating source and transfers heat to the amorphous material.

6. The amorphous core annealing method according to claim 5, wherein the heat source is held between an amorphous material of n-th (n is an integer of 2 or more) layer from the innermost periphery side and an amorphous material of (n+1)th layer.

7. The amorphous core annealing method according to claim 5, wherein the heat source is a substance having a thermal conductivity of 25 W/m·K or higher.

8. An amorphous core annealing method, wherein a heat source is brought into contact with the lamination end surface of a block-shaped laminated body formed by laminating a plurality of thin sheets of amorphous material, and annealing is performed by the heat supplied from the heat source.

9. The amorphous core annealing method according to claim 8, wherein the heat source is configured so that a portion which is in contact with the lamination end surface of the block-shaped laminated body is formed by a fibre material.

10. An amorphous core annealing method, wherein an iron core is configured by a block-shaped laminated body formed by laminating a plurality of thin sheets of amorphous material, a first heat source is held between the adjacent amorphous materials, a second heat source is brought into contact with the lamination end surface of the block-shaped laminated body, and annealing is performed by the heat supplied from the first heat source and the second heat source.

11. The amorphous core annealing method according to claim 10, wherein the first heat source is a heater which consists of a laminated thin sheet consisting of a nonmagnetic body and a plurality of independent coils which are held between the laminated thin sheets and generate heat due to induction overheat, and the second heat source is configured so that a portion which is in contact with the lamination end surface of the block-shaped laminated body is formed by a fibre material.

12. The amorphous core annealing method according to clam 10, wherein the first heat source is a heat conductive thin sheet consisting of a nonmagnetic body which is heated by an external heating source and transfers heat to the amorphous material, and the second heat source is configured so that a portion which is in contact with the lamination end surface of the block-shaped laminated body is formed by a fibre material.

13. An amorphous core annealing method, wherein a block-shaped laminated body is formed by laminating a plurality of thin sheets of amorphous material, an iron core is formed by laminating a plurality of layers of the block-shaped laminated body, the block-shaped laminated body of plural layers is extended in the direction perpendicular to a lamination surface so as to form a plurality of steps, and annealing is performed for every block-shaped laminated body of the plurality of steps.

14. The amorphous core annealing method according to claim 13, wherein a heat source is held between the adjacent amorphous materials in the block-shaped laminated body, and annealing is performed by heat supplied from the heat source.

15. The amorphous core annealing method according to claim 14, wherein the heat source is a heater which consists of a laminated thin sheet consisting of a nonmagnetic body and a plurality of independent coils which are held between the laminated thin sheets and generate heat due to induction overheat.

16. The amorphous core annealing method according to claim 14, wherein the heat source is a heat conductive thin sheet consisting of a nonmagnetic body which is heated by an external heating source and transfers heat to the amorphous material.

17. The amorphous core annealing method according to claim 13, wherein a heat source is brought into contact with the lamination end surface of the block-shaped laminated body, and annealing is performed by the heat supplied from the heat source.

18. The amorphous core annealing method according to claim 13, wherein a first heat source is held between the adjacent amorphous materials laminated in the block-shaped laminated body, a second heat source is brought into contact with the lamination end surface of the block-shaped laminated body, and annealing is performed by the heat supplied from the first heat source and the second heat source.
